# EUROPEAN PATENT APPLICATION

(11) **EP 2 461 587 A1**
(43) Date of publication of application: **06.06.2012**
(21) Application number: 10306336.8
(22) Date of filing: 01.12.2010
(51) Int. Cl.: H04N 7/26, H04N 7/34, H04N 7/36, G06T 9/00, G06T 15/50

(54) **Method and devices for transmitting 3D video information from a server to a client**

(71) Applicant: Alcatel Lucent, 75007 Paris (FR)
(72) Inventor: Van den Berghe, Steven, 9620, Zottegem (BE); De Schepper, Koen, 2640, Mortsel (BE)
(74) Representative: D'Halleweyn, Nele Veerle Trees Gertrudis

(57) **Abstract**

A method is disclosed for transmitting a 3D representation of a 3D scene model, the 3D scene model being information defining geometry and material information for a set of 3D objects and light sources and being stored in a server, from the server to a first client device, over a data communication network, wherein the 3D representation corresponds to a virtual viewing point for a first user associated with the first client device, the method comprising:
- deriving in the server, from the 3D scene model, representation information for the 3D objects;
- performing compression of the representation information;
- forwarding the compressed representation information towards the first client device for display;
wherein the representation information further comprises illumination information for the 3D objects, and wherein illumination information for the 3D object corresponds to more than one virtual viewing point for a user; a server and a routing means.

## Description

### Technical field of the invention

The present invention relates to the field of methods and device for rendering a 3D video from a server to a client. In typical applications the 3D video is rendered to a user by means of a 2D display associated with the client device. The 2D image rendered on the display can correspond to a virtual viewing point of the user in a virtual 3D scene model.

### Background of the invention

There is an increasing set of applications that require high-end 3D rendering (including games and user interfaces). Existing solutions for 3D rendering are based on different principles. In 3D games or applications, the environment is described as a scene, containing objects in a 3D space. These objects are typically defined as facet structures which comprise for instance triangular facets. These facets are also provided with a predetermined "texture", either by means of a very simple function (a static color or gradient), or by means of a picture (e.g. a jpeg file) or through more complex expressions of the surface physical behavior (e.g. the so-called bidirectional reflectance distributions BRDF as described by "Interactive Rendering with Arbitrary BRDFs using Separable Approximations", Jan Kautz and Michael D. McCool, in the proceedings of Eurographics Rendering Workshop 1999).
Next to the object, light sources are defined with specific characteristics (color, diffusion model, etc.).

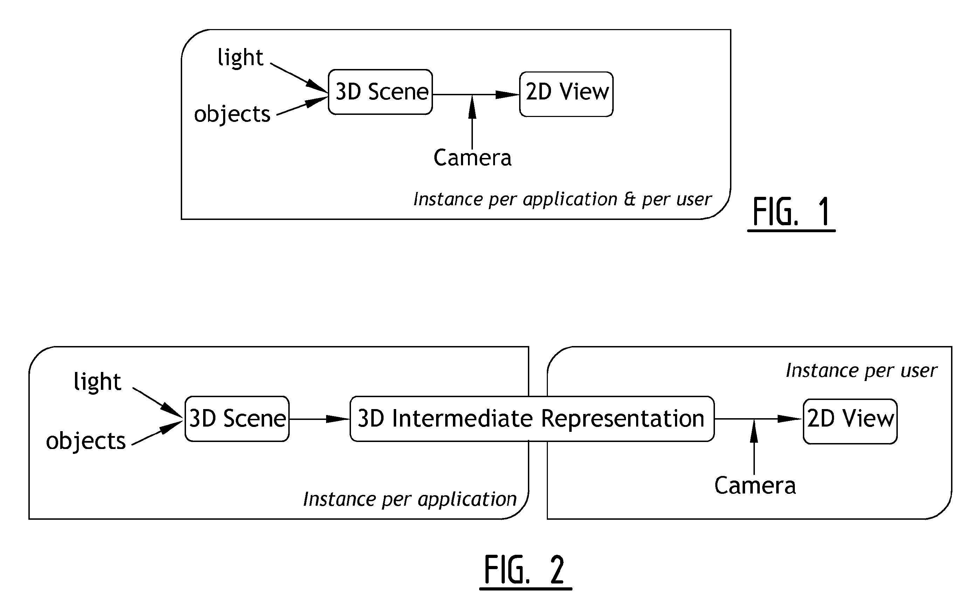

Current deployments run both the 3D processing and 2D processing either in a server node and output the 2D to a video stream towards a client for rendering on a 2D display associated to the client), or in the home (playstation, PC, ...) (see Fig. 1). 3D processing and 2D processing cannot be split and therefore, distributed processing is not possible. Moreover, the processing must be performed for each application and for each user. This obviously raises scalability issues.

### Summary of the invention

It is an object of the present invention to provide a method according to claim 1, a server according to claim 6, and a routing means according to claim 10, which solve at least one of the above problems.

According to a first aspect of the present invention, a method is disclosed for transmitting a 3D representation of a 3D scene model, the 3D scene model being information defining geometry and material information for a set of 3D objects and light sources and being stored in a server, from the server to a first client device, over a data communication network, wherein the 3D representation corresponds to a virtual viewing point for a first user associated with the first client device, the method comprising:
- deriving in the server, from the 3D scene model, representation information for the 3D objects;
- performing compression of the representation information;
- forwarding the compressed representation information towards the first client device for display;
wherein the representation information further comprises illumination information for the 3D objects, and wherein illumination information for the 3D object corresponds to more than one virtual viewing point for a user.

Geometry information is information relating to the (possibly changing) geometry of objects within the 3D scene model.

Material information is information defining the optical characteristics of the (virtual) materials which are defining the 3D objects. Material information may comprise information which describes the interaction of the respective 3D objects with light. Material information may comprise at least one of colour, light absorption, diffusion, refraction and reflection parameters of objects or parts of objects. Material information may comprise a plurality of or all of these parameters.

Light source information can comprise the number of light sources, the virtual position of the light source in the scene, type of light source, intensity of emitted light, etc.

According to embodiments of the present invention, the illumination information which is part of the representation information is compressed within said compressed representation information.

According to preferred embodiments, compression comprises at least one of temporal and spatial compression. Temporal and spatial compression on themselves are known to the skilled person, and can be found in for instance the area of 3D mesh representations (as described in "Spatially and temporally scalable compression of animated 3D meshes with MPEG-4 / FAMC", N. Stefanoski et al., In proceedings of 15th IEEE International Conference on Image Processing, ICIP, 2008).

According to preferred embodiments, the method further comprises deriving the illumination information by photon mapping techniques.

The illumination information is, according to embodiments of the present invention, derived by applying photon mapping mechanisms (as for instance described in "Global Illumination Using Photon Maps", Henrik Wann Jensen, In Proceedings of the Seventh Eurographics Workshop on Rendering) to create colour information related to the illumination of the scene. This includes calculating the effects of the light sources on the scene in terms of reflection, refraction, shadow and diffusion, resulting in colour information for selected points in the scene. This information on the colour is than stored in one or multiple summarizing photon tables, and these tables are subsequently compressed, preferably both spatially (within the scene representation at a specific point in time) and temporally (referencing to the scene representation at different points in time).

According to preferred embodiments, the representation information comprises 3D facet structure information of the objects and the illumination information comprises respective illumination information for the facets.

The illumination information can be derived by applying ray tracing mechanisms as for instance described in "Advanced animation and rendering techniques" chapters 7-9, A Watt, ISBN 978-0201544121, to transform the scene information into colour information for each of the facets. This includes calculating the effects of the light sources on the scene in terms of reflection, refraction, shadow and diffusion, resulting in colour information for each of the facets. This information on the colour is than compressed preferably spatially (within the scene representation at a specific point in time) and temporally (referencing to the scene representation at different points in time).

According to preferred embodiments of the present invention, the representation information is used further on in the data communication network, in order to provide a solution for reducing the number of necessary data flows between a server and a number of client devices being served by the server. The data communication network comprises therefore at least an intermediate node in which the compressed representation information is received from the server, and the intermediate node derives required representation information for the first user from the compressed representation information, uses the required representation information to create a 2D view on the scene for the first client device, and derives from the same compressed representation information, the required representation information for a second client device associated to a second user, the second user being associated to the same 3D scene model and having a virtual viewing point which is the same as or different from the virtual viewing point of the first user, and for which the illumination information is also representative for creating a 2D view on the scene from the virtual viewing point of the second user.

According to embodiments of the present invention the second user can be the same as the first user. The second client device and the first client device can then be the same or different.

According to embodiments of the present invention, the first and second client devices are the same, while the first and second users are not the same. Rendering views for a first user and a second user different from the first user can for instance be performed on a single display, whereby each user gets assigned half of the display area.

Each client device can comprise or can be associated to a single display means, as for instance a screen for rendering 2D images / video.

According to a second aspect of the present invention, a server is disclosed for transmitting a 3D representation of a 3D scene model to a client device, the 3D scene model being information defining geometry and material information for a set of 3D objects and light sources, over a data communication network, wherein the 3D representation corresponds to a virtual viewing point for a user associated with the client device, the server being adapted for:
- deriving representation information for the 3D objects from the 3D scene model;
- performing compression of the representation information; and
- forwarding the compressed representation information towards the client device for display;
wherein the server is further adapted for deriving representation information which comprises illumination information for the 3D objects, and wherein the illumination information for the 3D object corresponds to more than one virtual viewing point for a user.

According to preferred embodiments, the server is further adapted for performing at least one of temporal and spatial compression of the representation information.
According to preferred embodiments, the server is further adapted for deriving the illumination information by photon mapping techniques.

According to preferred embodiments, the server is further adapted for deriving representation information by deriving 3D facet structure information of the 3D objects and respective illumination information for the respective facets.

According to a third aspect of the present invention, a routing means, as for instance a router, is disclosed for a communication network, being adapted for receiving compressed representation information for a server according to any of the claims 6 to 9, and further being adapted for;
- deriving required representation information from said compressed representation information for a first user associated to a first client being served by said server;
- creating a 2D view on said 3D scene for a first user based on said required representation information for said first user;
- deriving from the same compressed representation information, required representation information for a second user associated to a second device, said second user being associated to the same 3D scene model and having a virtual viewing point which is the same as or different from the virtual viewing point of the first user, and for which the illumination information is also representative for creating a 2D view on the scene from the viewing point of the second user;
- creating a 2D view on the scene from the viewing point of the second user, based on the required representation information for said second user.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

As would be recognised by the skilled person, features described for one of the aspect of the present invention can also be combined with the other aspects.

### Brief description of the drawings

The accompanying drawings are used to illustrate embodiments of the present invention.

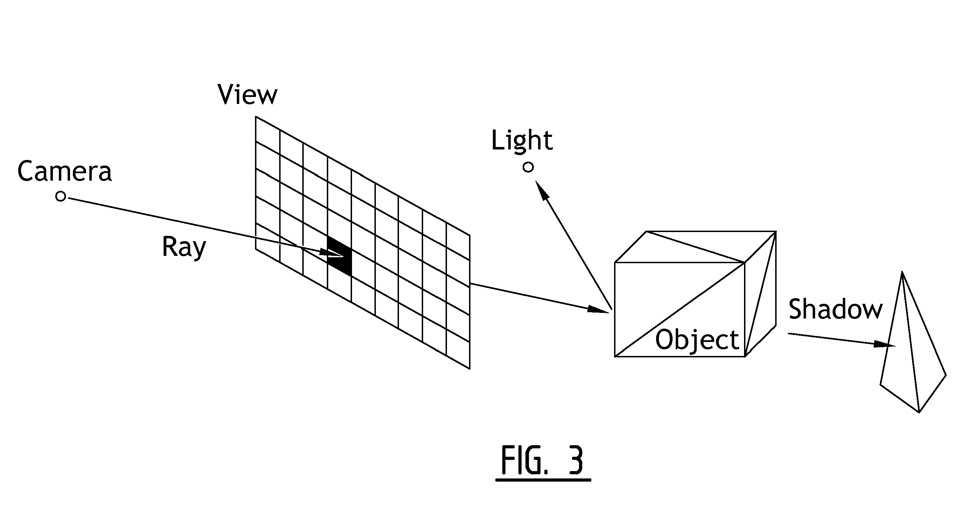

Fig. 1 and 3 illustrate a 3D rendering process according to the state of the art, wherein a "camera" of processing instance is required for each application and for each user. Fig. 2, 4, 5, 6 and 7 illustrate embodiments according to the present invention, wherein representation information comprises illumination information for the 3D objects, the illumination information corresponding to more than one virtual viewing point for a user.

Reference signs are chosen such that they are the same for similar or equal elements or features in different figures or drawings.

### Description of illustrative embodiments

The description of aspects of the present invention is performed by means of particular embodiments and with reference to certain drawings but the invention is not limited thereto. Depicted figures are only schematic and should not be considered as limiting.

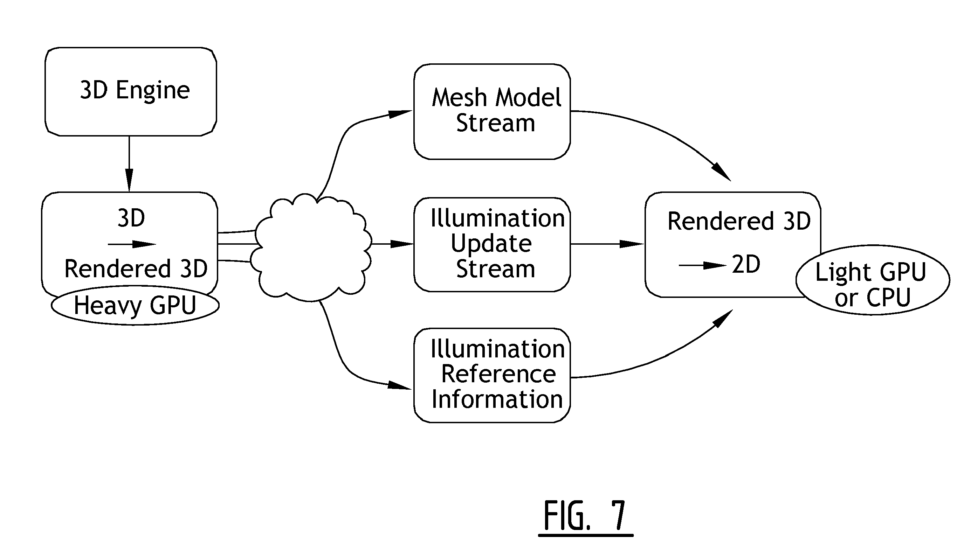

According to embodiments of the present disclosure, an intermediate representation of the 3D scene is generated, which is the result of heavy processing to create a realistic illumination. This intermediate presentation can be used to create multiple virtual viewpoints out of it by means of a relatively simple process the client side, and can be run on devices with limited processing capabilities. This allows to run a single processing instance per application for instance at a high end server in the cloud, while the 2D view is constructed close to the user or in the home with relatively low processing equipment. This is illustrated in Fig. 2.
As a result, the transfer of information from the 3D scene can be split in (see Fig. 7):
- structural description of the scene evolution (i.e. movement of polygon mesh);
- reference information, such as the illumination information for the scene at time T, to be used for temporal prediction for the scene at time T+1;
- an update stream providing residual information on the reference information.

The following sections will detail this process and will give two example algorithms of how the scene can be encoded.

The idea to encode a 3D animation for improved temporal and spatial compression is expressed in the existing MPEG4 standard "Frame-based Animated Mesh Compression (FAMC)"; Amendement 2 of part 16 AFX (Animation Framework eXtension). The goal of this and other similar research has been to make it easier to exchange a polygon mesh information which corresponds to moving objects in scene, and describes compression algorithms for the position of the points in the mesh and their movement over time.

However, the encoding/decoding of the scene is not the heaviest subprocess of the rendering process: the lighting process still needs to be done for each animated frame. The latter can be performed according to state of the art techniques, but requires a huge amount of processing power.

The efficiency of 3D information transport can be improved with respect to the illumination aspect in different ways. Part of the improvement is a gain due to the re-use of information for multiple viewing points. Within a scene, most of the illumination is independent of the virtual viewing point. More specifically, shadows and intra-scene reflections (i.e. reflections of one object on another) are re-usable across viewing points. When two users request a view on the same scene, re-use of the illumination information can avoid double processing and thus reduce the processing requirements.

A second improvement is due to gain which can be made by exploiting temporal and spatial redudancy in the illumination information, such as:
- Scene illumination typically generates spatially very correlated results. In other words: when looking at a scene containing only a white vase, there is a good chance that "white" is a good prediction for its illuminated model. We can use a white facet as reference information, and complement this with illumination update information reflecting more subtle changes in colour and shadowing.
- The same correlation is also true temporally (e.g. if an object pivots in an animated scene, the colour of its facets at time T is a good prediction for the color of that same facet at time T+1).

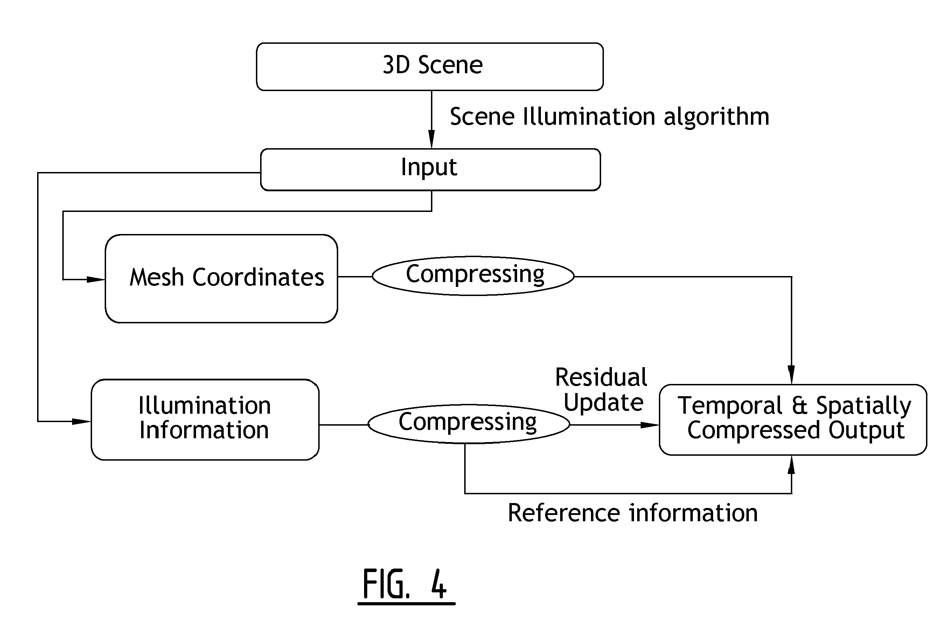

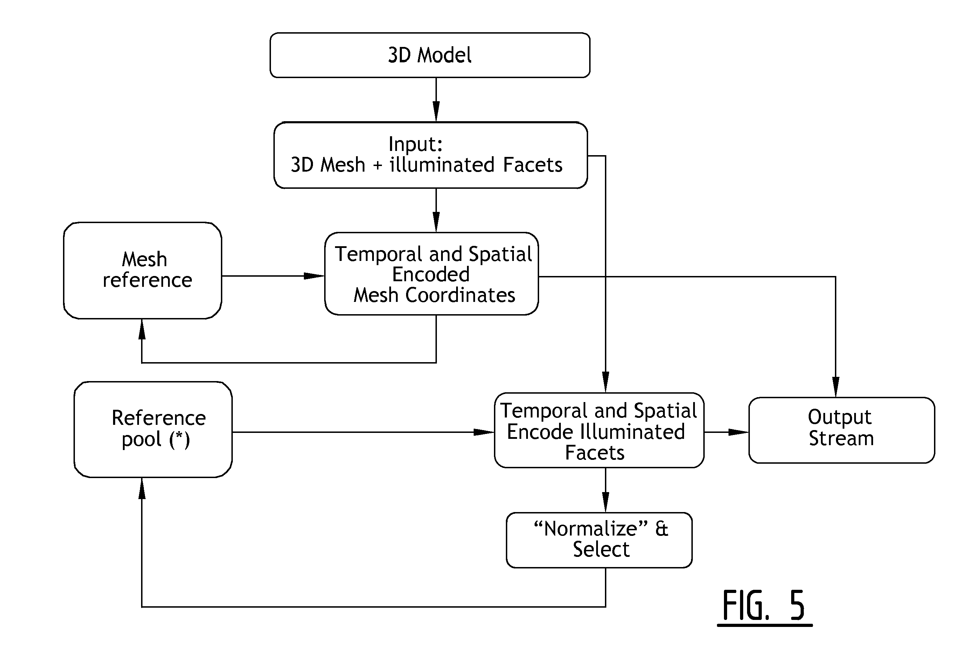

The reference encoder shown in Fig. 4 and 5 describes the process at a generic level. An illumination algorithm is used to create an illuminated 3D scene (i.e. taking into account the impact of light sources on a scene). The structure of the scene is than encoded using "traditional" mesh encoding techniques. According to embodiments of the present invention, the illumination information is encoded and combined with the mesh into the output stream. For both cases we assume the encoding is based on a in-process encode/decode loop to create temporal references. Multiple algorithms can now be plugged into this model, differing in the way they input the illuminated model, and especially optimizing the illumination encoding.

Some methods which can be used are described below.

Ray tracing (see Fig. 3) is a technique for creating photo-realistic 2D views from a 3D scene representation. The basic principle is that traversal of light rays through the scene, and their physical properties (reflection, diffusion, ...) is simulated. The most used form is to simulate a ray coming from a camera, for each point in a viewport. At the intersection of a ray with an object, a secondary ray is spun to look for the light that shines at this point. If that ray hits another object, this will mean the object is in the shadow. Otherwise the intensity of the light at that point can be calculated from the distance and angle of the secondary ray. Both the primary and secondary ray can also "bounce off" objects to create reflections, each bounce again creating additional rays. It is clear that the amount of rays can increase exponentially, which makes this technique very calculation intensive.

Basic ray tracing algorithms are single phase techniques, thus distributing the processing between a heavy and lighter process is impossible. However, the result of one trace process for a view as a first prediction can be used for a second view. This allows to use reference information from one stream as a first prediction for another, allowing to better spatially and temporally compress the streams than as individual 2D streams.

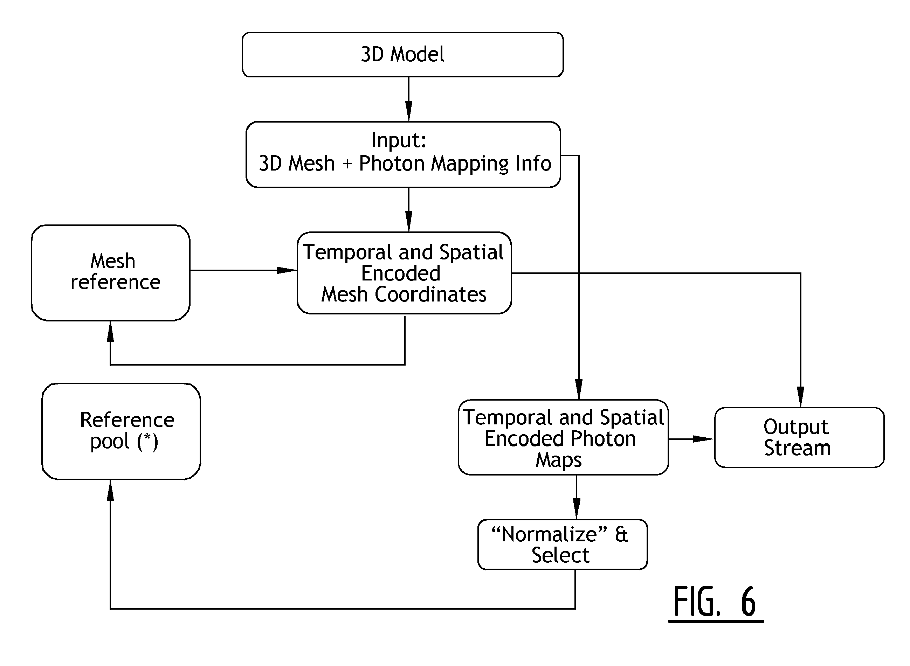

Next to the missing gain in processing, the basic ray tracing is also limited in the representation of certain effects. Some interesting recent approaches use a dual phase: first the impact of the lights on the scene are simulated, after which the ray tracing process uses this information as a better estimate of the colour of a surface. In one popular algorithm "photon mapping", the impact of the light of a scene is for instance calculated by simulating a large number of photons that traverse the scene until they get absorbed by an object or leave the scene. The results of this is summarized ("gathering photons") and stored in one or multiple so-called "photon maps" (multiple maps can be used to concentrate photons around certain more complex areas in the scene). When performing the basic ray tracing, multiple views and rays can make use of these tables to avoid having to send too many secondary streams. By putting the photon mapping and ray tracing in two different processes, the complexity can be distributed over the network. The photon maps therefore needs to be encoded. Fig 6. details the encoder process for use with the photon mapping technique.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

While some embodiments described herein include some but not other features included in other embodiments, combinations of features of different embodiments are meant to be within the scope of the invention, and form different embodiments, as would be understood by the skilled person.

## Claims

1. A method for transmitting a 3D representation of a 3D scene model, said 3D scene model being information defining geometry and material information for a set of 3D objects and light sources and being stored in a server, from said server to a first client device, over a data communication network, wherein said 3D representation corresponds to a virtual viewing point for a first user associated with said first client device, the method comprising:
- deriving in said server, from said 3D scene model, representation information for said 3D objects;
- performing compression of said representation information;
- forwarding said compressed representation information towards said first client device for display;
wherein said representation information further comprises illumination information for said 3D objects, and wherein illumination information for said 3D object corresponds to more than one virtual viewing point for a user.

2. A method according to any of claims 1, wherein compression comprises at least one of temporal and spatial compression.

3. A method according to any of claims 1, further comprising deriving said illumination information by photon mapping techniques.

4. A method according to any of the previous claims, wherein said representation information comprises 3D facet structure information of said objects and wherein said illumination information comprises respective illumination information for said facets.

5. A method according to any of claims 1 to 4, wherein said data communication network comprises at least an intermediate node in which said compressed representation information is received, and wherein said intermediate node derives required representation information for said first user from said compressed representation information, uses said required representation information to create a 2D view on the scene for said first client device, and derives from the same compressed representation information, the required representation information for a second client device associated to a second user, said second user being associated to the same 3D scene model and having a virtual viewing point which is the same as or different from the virtual viewing point of the first user, and for which the illumination information is also representative for creating a 2D view on the scene from the virtual viewing point of said second user.

6. A server for transmitting a 3D representation of a 3D scene model to a client device, said 3D scene model being information defining geometry and material information for a set of 3D objects and light sources, over a data communication network, wherein said 3D representation corresponds to a virtual viewing point for a user associated with said client device, the server being adapted for:
- deriving representation information for said 3D objects from said 3D scene model;
- performing compression of said representation information; and
- forwarding said compressed representation information towards said client device for display;
wherein said server is further adapted for deriving representation information which comprises illumination information for said 3D objects, and wherein said illumination information for said 3D object corresponds to more than one virtual viewing point for a user.

7. A server according to claim 6, adapted for performing at least one of temporal and spatial compression of said representation information.

8. A server according to any of claims 6 to 7, further being adapted for deriving said illumination information by photon mapping techniques.

9. A server according to any of the previous claims 6 to 8, further adapted for deriving representation information by deriving 3D facet structure information of said 3D objects and respective illumination information for the respective facets.

10. A routing means for a communication network, being adapted for receiving compressed representation information for a server according to any of the claims 6 to 9, and further being adapted for;
- deriving required representation information from said compressed representation information for a first user associated to a first client being served by said server;
- creating a 2D view on said 3D scene for a first user based on said required representation information for said first user;
- deriving from the same compressed representation information, required representation information for a second user associated to a second device, said second user being associated to the same 3D scene model and having a virtual viewing point which is the same as or different from the virtual viewing point of the first user, and for which the illumination information is also representative for creating a 2D view on the scene from the virtual viewing point of the second user;
- creating a 2D view on the scene from the virtual viewing point of the second user, based on the required representation information for said second user.
